(19) Europäisches Patentamt

European Patent Office

Office européen des brevets

(11) Veröffentlichungsnummer: **0 300 378**
**A1**

(12) **EUROPÄISCHE PATENTANMELDUNG**

(21) Anmeldenummer: **88111386.4**

(22) Anmeldetag: **15.07.88**

(51) Int. Cl.⁴: **C09D 3/49**

(30) Priorität: **23.07.87 DE 3724369**

(43) Veröffentlichungstag der Anmeldung:
**25.01.89 Patentblatt 89/04**

(84) Benannte Vertragsstaaten:
**AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Gulbins, Erich, Dr.**
**Ladenburger Strasse 80**
**D-6900 Heidelberg(DE)**
Erfinder: **Ley, Gregor, Dr.**
**In den Trankstuecken**
**D-6719 Wattenheim(DE)**

(54) **Verwendung einer wässrigen Dispersion zur Herstellung eines mehrschichtigen Überzuges.**

㊗ Die vorliegende Erfindung betrifft die Verwendung einer wäßrigen Dispersion, enthaltend

(A) ein carbonylgruppenhaltiges Copolymerisat aus monoolefinisch ungesättigten Verbindungen, von denen mindestens 10 Gew.% mit Hydrazidgruppen reagierende Carbonylgruppen auweisen und

(B) Polyhydraziden, als Unterbelag eines mehrschichtigen Überzugs auf einem Substrat sowie ein Verfahren zu dessen Herstellung.

EP 0 300 378 A1

Verwendung einer wäßrigen Dispersion zur Herstellung eines mehrschichtigen Überzuges

Die vorliegende Erfindung betrifft die Verwendung einer wäßrigen Dispersion, enthaltend

(A) ein carbonylgruppenhaltiges Copolymerisat aus monoolefinisch ungesättigten Verbindungen, von denen mindestens 10 Gew.% mit Hydrazidgruppen reagierende Carbonylgruppen aufweisen und

(B) Polyhydraziden, als Unterbelag eines mehrschichtigen Überzugs auf einem Substrat sowie ein Verfahren zu dessen Herstellung.

Verfahren zur Herstellung von mehrschichtigen Überzügen sind bekannt. So wird in der EP 38 127 ein Verfahren zur Herstellung eines mehrschichtigen Belages auf einer Substratoberfläche beschrieben, wobei als Unterbelag (base coat) eine wäßrige Dispersion von hochvernetzten Polymermikroteilchen verwendet wird. Nachteilig bei diesem Verfahren ist, daß die hochvernetzten Teilchen keine gute Filmbildungseigenschaften aufweisen und zu Störungen in der Oberfläche führen können.

Aufgabe der vorliegenden Erfindung war es, für ein Verfahren zur Herstellung von mehrschichtigen Überzügen stabile wäßrige Dispersionen zur Herstellung des base coat zur Verfügung zu stellen, die gut verfilmen und bei denen die Vernetzung erst bei der Filmbildung einsetzt.

Gegenstand der Erfindung ist die Verwendung einer wäßrigen Dispersion, enthaltend

(A) ein carbonylgruppenhaltiges Copolymerisat aus monoolefinisch ungesättigten Verbindungen, von denen mindestens 10 Gew.% mit Hydrazidgruppen reagierende Carbonylgruppen aufweisen und

(B) Polyhydraziden, als Unterbelag eines mehrschichtigen Überzuges auf einem Substrat sowie ein Verfahren zu dessen Herstellung.

Der besondere Vorteil dieses Verfahrens liegt darin, daß die Vernetzung des base coat im wesentlichen erst bei der Herstellung der Filme stattfindet. Wenn die in der wäßrigen Phase gelösten Polyhydrazide nach dem Verdampfen des Wassers mit den Keto-/Aldehyd-Gruppen des Copolymeren reagieren. Deshalb ist die Dispersion lagerstabil und hat gute Verfilmungseigenschaften. Daraus hergestellte Filme weisen eine ausgezeichnete Glanzhaltung nach Schwitzwasserbelastung (DIN 50 017) und eine hohe Aromatenfestigkeit auf.

Die wäßrigen Dispersionen für den base coat sind allgemein bekannt und sind nicht Gegenstand der vorliegenden Erfindung. So wird beispielsweise in der DE-OS 14 95 706 ein Verfahren zur Herstellung ketogruppenhaltiger Polymerisate beschrieben, in dem man ungesättigte polymerisierbare Ketoverbindungen homo- oder copolymerisiert und mit mehrfunktionellen Hydraziden vernetzt.

Als Komponente (A) sind carbonylgruppenhaltige Copolymerisate geeignet. Dazu gehören Copolymerisate der (Meth-)acrylsäureester von Alkoholen von 1 bis 20 Kohlenstoffatomen, wie Methyl-, Ethyl-, Propyl-, n-, i- und t-Butylcyclohexyl, 2-Ethylhexyl, Decyl-, Lauryl- und Stearyl-(meth)acrylat mit z.B. $\alpha$, $\beta$-monoolefinisch ungesättigten Carbonsäuren wie Acrylsäure, Methacrylsäure, Maleinsäure, Maleinsäurehalbester oder auch Maleinsäureanhydrid und nachfolgender Maleinsäurehalbesterbildung durch Umsetzung mit Alkoholen, Vinylestern von 1 bis 20 Kohlenstoffatome enthaltenden Carbonsäuren wie Vinylformiat, -acetat, -propionat, -butyrat, -laurat und -stearat, Vinylethern mit 3 bis 22 Kohlenstoffatomen wie Methyl-, Ethyl-, Butyl-, Hexyl-, Octadecylvinylether, Vinylaromaten mit 8 bis 18 Kohlenstoffatomen wie Styrol, Methylstyrol, Vinyltoluole, t-Butylstyrol, Halogenstyrole, Olefinen mit 2 bis 20 Kohlenstoffatomen wie Ethylen, Propylen, n- und i-Butylen, Diisobuten, Triisobuten, Oligopropylene, Vinylhalogeniden wie Vinylchlorid, -bromid und Vinylidenchlorid, Allylethern, Allylalkoholen und Allylestern. Bevorzugt werden Methyl-, Ethyl-, n-, i-, 2-Ethylhexyl(meth)acrylat, Acrylsäure, Methacrylsäure, Vinylpropionat, Styrol und Vinyltoluol.

Die Einführung der Carbonylgruppen in die Copolymerisate (A) ist möglich durch die Mitverwendung copolymerisierbarer Carbonylverbindungen, z.B. $\alpha$, $\beta$-monoolefinisch ungesättigter Aldehyde und/oder Ketone wie Acrolein, Methacrolein, Vinylalkylketone mit 1 bis 20 Kohlenstoffatomen im Alkylrest, Formylstyrol, (Meth)acryloxyalkanale und -alkanole, deren Herstellung z.B. in der DE-OS 27 22 097 beschrieben ist, N-Oxoalkyl(meth)acrylamide, wie sie u.a. in der US-PS 42 26 007, der DE-OS 20 61 213 oder DE-OS 22 07 209 beschrieben sind, z.B. N-3-Oxobutyl-acrylamid und -methacrylamid, N-1,1-Dimethyl-3-oxobutyl(meth)-acrylamid, Diaceton(meth)acrylamid, sowie N-3-Oxo-1,1dibutyl- 2-propyl-hexylacrylamid, ferner Acetonyl- und Diaceton(meth)acrylat oder Acrylamidopivalinaldehyd oder von Gemischen dieser Comonomeren. Bevorzugt werden 3-Oxaalkyl-(meth)acrylate und N-3-Oxoalkyl(meth)acrylamide sowie Methylvinylketon und Methacrolein oder Acrolein.

Zur Herstellung der Copolymerisate (A) können auch andere funktionelle Gruppen enthaltende Monomere mitverwendet werden, z.B. solche mit Hydroxylgruppen wie Hydroxyalkyl(meth)acrylate, wie 2-Hydroxypropyl-acrylat und -methacrylat, 2-Hydroxyethyl(meth)acrylat und 4-Hydroxybutyl-(meth)acrylat. Die Copolymerisate (A) weisen im allgemeinen K-Werte von 10 bis 200, vorzugsweise 10 bis 80 auf, bestimmt nach DIN 53 726.

Der Gehalt der Komponente (A) an Carboxylgruppen ist so zu wählen, daß nach der Neutralisation bzw. Teilneutralisation Wasserverdünnbarkeit bzw. Wasserdispergierbarkeit gegeben ist. Der dazu notwendige Mindestgehalt von Carboxylgruppen hängt auch vom Aufbau des Polymeren (A) ab, hydrophobe Bestandteile wie z.B. Styrol benötigen mehr Carboxylgruppen als hydrophilere Bestandteile wie z.B. niedere Acrylester. Die Copolymerisate (A) weisen im allgemeinen Säurezahlen von ca. 5 bis 250, vorzugsweise 20 bis 100 auf. Bei der Herstellung der Copolymerisate (A) werden im allgemeinen 10 bis 50 Gew.% copolymerisierbare Carbonylverbindungen verwendet, bevorzugt 10 bis 20 Gew.%.

Geeignete Polyhydrazide (B) sind z.B. Dihydrazide organischer Di- oder Oligocarbonsäuren. Als Beispiele seien genannt Malonsäure-, Bernsteinsäure-, Glutarsäure-, Adipinsäure-, Pimelinsäure-, Korksäure-, Azelainsäure-, Sebacinsäure-, Undecandisäure-, Dodecandisäure-, Tridecandisäure-, Tetradecandisäure-, Pentadecandisäure-, Hexadecandisäure-, 2-Methyltetradecandisäure-dihydrazid, ferner Methyl-, Ethyl-, Propyl-, Butyl-, Hexyl-, Octyl-, 2-Ethylhexyl-, Nonyl-, Decyl-, Undecyl- und Dodecylmalonsäuredihydrazid, Methyl-, Ethyl-, Propyl-, Butyl-, Hexyl-, Heptyl-, Octylbernstein- und -glutarsäuredihydrazid, Cyclohexandicarbonsäure- und Cyclohexylmethylmalonsäure-dihydrazid, Terephthalsäure-, Phenylbernsteinsäure-, Cinnamylmalonsäure- und Benzylmalonsäuredihydrazid, Pentan-1.3.5-tricarbonsäuretrihydrazid, Hex-4-en-1.2.6-tricarbonsäuretrihydrazid, 3-Cyanpentan-1.3.5-tricarbonsäuretrihydrazid, Dicyanfumarsäuredihydrazid, ferner die Di- bzw. Oligohydrazide von dimerisierten bzw. oligomerisierten ungesättigten Fettsäuren. Bevorzugt sind Bernsteinsäure-, Glutarsäure- und Adipinsäuredihydrazid.

Komponente (A) wird mit Komponente (B) im allgemeinen in solchen Mengen kombiniert, daß die Hydrazidgruppen der Komponente (B) zu Carbonylgruppen der Komponente (A) im Äquivalenzverhältnis von 0,1 zu 1, vorzugsweise 0,1 bis 0,9 zur Umsetzung eingesetzt werden.

Die Feststoffgehalte der wäßrigen Dispersionen liegen zwischen 20 und 60 Gew.%, bevorzugt zwischen 30 und 50 Gew.%. Es können noch bis zu 30 Gew.%, bezogen auf den Feststoffgehalt, Pigmente und/oder Extender sowie bis zu 15 Gew.%, bezogen auf den fertigen Lack, Lösungsmittel und weitere Hilfsmittel mitverwendet werden.

Die wäßrigen Dispersionen werden nach bekannten Verfahren durch beispielsweise Streichen, Sprühen, Tauchen, Rakeln oder Walzen auf das Substrat aufgebracht und das Wasser bei Raumtemperatur bis 50°C über einen Zeitraum von 1 bis 10 min, bevorzugt 2 bis 5 min, abgelüftet, wobei der base coat verfilmt und vernetzt. Auf diesen base coat wird mindestens eine weitere Beschichtung auf Basis von Polymerisations-, Polyadditions- oder Polykondensationsprodukten wie beispielsweise Polyacrylate, Polyurethane, Melaminharze, Harnstoffharze oder Polyester, als Dispersionen oder als Lösung aufgebracht, bei Raumtemperatur bis 50°C über einen Zeitraum von 1 bis 20 min abgelüftet. Analog können noch weitere Deckschichten aufgebracht werden.

Für den Fall, daß als Deckschicht Zweikomponentensysteme auf Polyadditionsprodukt-Basis verwendet werden, erübrigt sich ein Einbrennen des mehrschichtigen Überzuges. Bei allen anderen Systemen wird nach dem Aufbringen der letzten Beschichtung der Mehrschichtenüberzug 10 bis 60 min, bei 70 bis 180°C, bevorzugt 70 bis 160°C, eingebrannt.

## Beispiel 1

In einem Reaktionsgefäß wurden 1020 g VE- (voll entsalztes) Wasser vorgelegt und auf 85°C erhitzt. Dann wurde 10 Gew.% eines Zulaufs 1 und 5 Gew.% eines Zulaufs 2 zugefügt. Nachdem die Polymerisation angesprungen war, wurde nach 15 min der Rest der beiden Zuläufe innerhalb von 2 Stunden in den Reaktor gegeben. Der Zulauf 1 war eine Emulsion aus 480 g VE-Wasser, 71,5 g einer 35 gew.%igen wäßrigen Lösung des Natriumsalzes eines sauren Schwefelsäureesters eines Adduktes aus 25 Mol Ethylenoxid an Nonylphenol, 585 g n-Butylacrylat, 345 g Styrol, 330 g Methylmethacrylat, 180 g Diacetonacrylamid und 60 g Acrylsäure. Als Zulauf 2 diente eine Lösung aus 7,5 g Natriumperoxidisulfat in 243 g VE-Wasser. Nach Ende der Zuläufe wurde noch 1 Stunde bei 85°C gehalten. Der Ansatz wurde auf Raumtemperatur abgekühlt und über Kaliko filtriert. Es wurde eine feinteilige Dispersion mit einem Feststoffgehalt von ca. 46 Gew.%, einem pH-Wert von ca. 2 und einer mittleren Teilchengröße nach Nanosizer-Messung von ca. D(NS) = 140 nm erhalten.

## Beispiel 2

In einem Reaktionsgefäß wurden 1020 g VE- (voll entsalztes) Wasser vorgelegt und auf 85°C erhitzt. Dann wurde 10 Gew.% eines Zulaufs 1 und 5 Gew.% eines Zulaufs 2 zugefügt. Nachdem die Polymerisation angesprungen war, wurde nach 15 Min. der Rest der beiden Zuläufe innerhalb von 2 Stunden in den Reaktor gegeben. Der Zulauf 1 war eine Emulsion aus 480 g VE-Wasser, 71,5 g einer 35 gew.%igen wäßrigen Lösung des Natriumsalzes eines sauren Schwefelsäureesters eines Adduktes aus 25 Mol Ethylenoxid an Nonylphenol, 585 g n-Butylacrylat, 315 g Styrol, 300 g Methylmethacrylat, 240 g Diacetonacrylamid und 60 g Acrylsäure. Als Zulauf 2 diente eine Lösung aus 7,5 g Natriumperoxidisulfat in 243 g VE-Wasser. Nach Ende der Zuläufe wurde noch 1 Stunde bei 85°C gehalten. Der Ansatz wurde auf Raumtemperatur abgekühlt und über Kaliko filtriert. Es wurde eine feinteilige Dispersion mit einem Feststoffgehalt von ca. 46 Gew.%, einem pH-Wert von ca. 2,1 und D(NS) = 140 nm erhalten.

Beispiel 3

Es wurde wie in Beispiel 1 verfahren, jedoch anstelle des Diacetonacrylamids wurden 180 g des Methacrylsäureesters von 2-Oxobutanol-1 verwendet. Die Daten der erhaltenen Dispersion entsprachen denen des Beispiels 1.

Beispiel 4

Getrennt wurden folgende Mischungen hergestellt:

1. 27,0 g einer handelsüblichen "non-leafing"-Metallic-Pigment-Paste auf Aluminium- oder Eisenbasis, für Wasserlacke geeignet, 0,1 g 2,4,7,9-Tetramethyl-5-decin-4,7-diol, 50%ig in Ethylenglykol und 16,0 g Butylglykol wurden sorgfältig gemischt (Gesamtmenge: 43,1 g)

2. 199,7 g der Dispersion aus Beispiel 1 wurden mit 1,8 g Ammoniak (25 gew.%ig) auf einen pH-Wert von 7,2 gestellt. Nacheinander wurden 52,9 g einer 10 gew.%igen wäßrigen Lösung von Adipinsäuredihydrazid, 1,6 g eines üblichen Fluortensids (Fluorad® FC 170 C der Firma 3M), 1/1 gelöst in Isopropanol, 1,6 g eines Korrosionsinhibitors 562 der Firma Erbslöh (Düsseldorf) (organ. Ammoniumnitrit-Lösung) und 1,6 g 2,4,7,9-Tetramethyl-5-decin-4,7-diol, 50 gew.%ig in Ethylenglykol in die Dispersion eingearbeitet (Gesamtmenge 259,2 g)

3. Aus 146,3 g vollentsalztem Wasser, 0,6 g 2,4,7,9-Tetramethyl-5-decin-4,7-diol, 50 gew.%ig in Ethylenglykol und 13,1 g des Verdickers Collacral® PU 85 der Firma BASF AG, 25 gew.%ig in - Urethan-           Wasser/Butylglykol (Polyurethanverdicker) wurde eine Verdickerlösung (Gesamtmenge: 160,0 g) hergestellt.

Für die Herstellung des spritzfertigen Lackes wurde wie folgt vorgegangen:

In 43,2 g der unter 1. beschriebenen, "non leafing"-Metallic-Pigment-Paste wurden unter Rühren zunächst rasch
60,0 g der Dispersionsmischung 2., danach langsam weitere
69,6 g derselben Dispersionsmischung 2. eingerührt. Danach wurden
65,0 g der Verdickerlösung 3., weitere
129,6 g der Dispersionsmischung 2. und
95,0 g der Verdickerlösung 3. eingearbeitet. Nach Zugabe von
50,0 g vollentsalztem Wasser wurde ein spritzfertiger Lack von
512,3 g Gesamtmenge mit einem pH-Wert von 7,4 und einer Auslaufviskosität im DIN-4-Becher von ca. 16 Sekunden erhalten.

Der spritzfertige Lack wurde in bekannter Weise mit einer Druckluft-Spritzpistole auf einem Substrat so appliziert, daß die Trocken-Schichtstärke der aufgebrachten Lackschicht deckend, d.h. mindestens 8-10 µm groß war. Nach einem Ablüften bei Raumtemperatur während einer Minute wurde die Lackschicht 5 Minuten bei 50°C in einem Umluft-Trockenschrank getrocknet. Auf diesen Unterbelag wurde ein nicht pigmentiertes Gemisch (Klarlack) aus
61,9 g eines fremdvernetzenden hydroxylgruppenhaltigen Polyacrylats, 60 gew.%ig in Solvesso® 100 (z.B. Luprenal® LR 8674 der Firma BASF AG),
36,9 g eines Melamin-Formaldehydharzes, mit Isobutanol verethert, ca. 53 gew.%ig in Isobutanol (z.B. Luwipal® 015 der Firma BASF AG) und
1,0 g eines Silikonöls (Silikonöl A der Firma Bayer AG)
mit einer Trocken-Schichtstärke von ca. 35µm mittels Druckluftspritzpistole aufgetragen. Nach einem Ablüften von 15 Min. bei Raumtemperatur wurde der resultierende Mehrschichtenüberzug 30 Min. lang in einem Umluft-Trockenschrank bei 130°C eingebrannt ( = vernetzt).

Der entstandene Mehrschichtenüberzug wurde nach DIN 50017 einem Schwitzwassertest unterzogen und der Glanz (gemessen mit Multigloss (Erichsen), Winkel 20°) als Gradmesser der Veränderungen unter den Bedingungen der DIN 50017 gemessen:

| | |
|---|---|
| 0-Wert: | 85 % |
| nach 10 d: | 83 % |
| nach 20 d: | 82 % |
| nach 30 d: | 82 % |

Beispiel 5

Getrennt wurden folgende Mischungen hergestellt:

1. 27,0 g einer handelsüblichen "non-leafing"-Metallic-Pigment-Paste auf Aluminium- oder Eisenbasis, für Wasserlack geeignet,

0,3 g 2,4,7,9-Tetramethyl-5-decin-4,7-diol, 50 gew.%ig in Ethlenglykol

0,2 g eines üblichen Fluortensids (Fluorad FC 170 C der Firma 3M) und

16,0 g Butylglykol wurden sorgfältig gemischt (Gesamtmenge: 43,5 g).

2. 200,0 g der Dispersion aus Beispiel 1, wurden mit 6,0 g einer 50 gew.%igen, wäßrigen Lösung von Triethanolamin versetzt (pH-Wert ca. 7,2).

Nacheinander wurden

5,3 g Adipinsäuredihydrazid,

1,4 g eines üblichen Fluortensids (Fluorad FC 170 C der Firma 3M),

1,6 g eines Korrosionsinhibitors 5 62 der Firma Erbslöh (Düsseldorf) (organ. Ammoniumnitrit-Lösung) und

1,4 g 2,4,7,9-Tetramethyl-5-decin-4,7-diol, 50 gew.%ig in Ethylenglykol und

47,3 g vollentsalztes Wasser

in die Dispersion eingearbeitet (Gesamtmenge 263,0 g)

Aus

146,3 g vollentsalztem Wasser

0,6 g 2,4,7,9-Tetramethyl-5-decin-4,7-diol, 50 gew.%ig in Ethylenglykol und

13,1 g des Verdickers Collacral PU 85 der Firma BASF, 25 gew.%ig in Wasser/Butylglykol (Polyurethanverdicker)

wurde eine Verdickerlösung (160,0 g) hergestellt.

Für die Herstellung des spritzfertigen Lackes wurde wie folgt vorgegangen.

In

43,5 g der unter 1. beschriebenen "non-leafing"-Metallic-Pigment-Paste wurden unter Rühren zunächst rasch

60,0 g der Dispersionsmischung 2., danach langsam weitere

71,5 g derselben Dispersionsmischung 2. eingerührt. Danach wurden

65,0 g der Verdickerlösung 3., weitere

131,5 g der Dispersionsmischung 2. und

95,0 g der Verdickerlösung 3. eingearbeitet. Nach Zugabe von

35,0 g vollentsalztem Wasser wurde ein spritzfertiger Lack von

501,5 g Gesamtmenge mit einem pH-Wert von 7,3 und einer Auslaufviskosität im DIN-4-Becher von ca. 16 Sekunden erhalten.

Der spritzfertige Lack wurde in bekannter Weise mit einer Druckluft-Spritzpistole auf einem Substrat so appliziert, daß die Trocken-Schichtstärke der aufgebrachten Lackschicht deckend, d.h. mindestens 8-10μm groß war. Nach einem Ablüften bei Raumtemperatur während einer Minute wurde die Lackschicht 5 Minuten bei 50°C in einem Umluft-Trockenschrank getrocknet.

Auf diesen Unterbelag wurde ein nicht pigmentiertes Gemisch (Klarlack) von

61,9 g eines fremdvernetzenden hydroxylgruppenhaltigen Polyacrylates, 60 gew.%ig in Solvesso 100 (z.B. Luprenal LR 8674 der Firma BASF AG)

36,9 g eines Melamin-Formaldehydharzes, mit Isobutanol verethert, ca. 53 gew.%ig in Isobutanol (z.B. Luwipal 015 der Firma BASF AG) und

0,1 g eines Silikonöls (Silikonöl A der Firma Bayer AG) mit einer Trocken-Schichtstärke von ca. 35 μm mittels Druckluftpistole aufgetragen. Nach einem Ablüften von 15 Min. bei Raumtemperatur wurde der resultierende Mehrschichtenüberzug 30 Min. lang in einem Umluft-Trockenschrank bei 130°C eingebrannt (= vernetzt).

Der entstandene Mehrschichtenüberzug wurde nach DIN 50017 einem Schwitzwassertest unterzogen und der Glanz (gemessen mit Multigloss (Erichsen), Winkel 20°) als Gradmesser der Veränderungen unter den Bedingungen der DIN 50017 gemessen:

O-Wert: 86 %

nach 10 d: 80 %

nach 20 d: 82 %

nach 30 d: 80 %

Beispiel 6

Getrennt wurden folgende Mischungen hergestellt:

1. 27,0 g einer handelsüblichen "non-leafing"-Metallic-Pigment-Paste auf Aluminium- oder Eisenbasis, für Wasserlacke geeignet,

0,1 g 2,4,7,9-Tetramethyl-5-decin-4,7-diol, 50 gew.%ig in Ethylenglykol und

16,0 g Butylglykol wurden sorgfältig gemischt

2. 196,0 g der Dispersion aus Beispiel 2, wurden mit

1,9 g Ammoniak (25 gew%ig) auf einen pH-Wert von 7,3 gestellt. Nacheinander wurden

70,3 g einer 10 gew.%igen wäßrigen Lösung von Adipinsäurehydrazid,

1,6 g eines üblichen Fluortensids (Fluorad FC 170 C der Firma 3M),

1,6 g eines Korrosionsinhibitors 562 der Firma Erbslöh (Düsseldorf, org. Ammoniumnitrit-Lösung) und

1,6 g 2,4,7,9-Tetramethyl-5-decin-4,7-diol, 50 gew.%ig in Ethylenglykol in die Dispersion eingearbeitet (Gesamtmenge 259,2 g)

3. Aus

146,3 g vollentsalztem Wasser

0,6 g 2,4,7,9-Tetramethyl-5-decin-4,7-diol, 50 gew.%ig in Ethylenglykol und

13,1 g des Verdickers Collacral PU 85 der Firma BASF AG, 25 gew.%ig in Wasser/Butylglykol (Polyurethanverdicker)

wurde eine Verdickerlösung (160,0 g Gesamtmenge) hergestellt.

Für die Herstellung des spritzfertigen Lackes wurde wie folgt vorgegangen:

In

43,1 g der unter 1. beschriebenen "non-leafing"-Metallic-Pigment-Paste wurden unter Rühren zunächst rasch

60,0 g der Dispersionsmischung 2., danach langsam weitere

76,5 g derselben Dispersionsmischung 2. eingerührt. Danach wurden

65,0 g der Verdickerlösung 3., weitere

136,5 g der Dispersionsmischung 2 und

95,0 g der Verdickerlösung 3 eingearbeitet. Nach Zugabe von

30,0 g vollentsalztem Wasser wurde ein spritzfertiger Lack von

506,1 g Gesamtmenge mit einem pH-Wert von 7,3 und einer Auslaufviskosität im DIN-4-Becher von ca. 16 Sekunden erhalten.

Der spritzfertige Lack wurde in bekannter Weise mit einer Druckluft-Spritzpistole auf einem Substrat so appliziert, daß die Trocken-Schichtstärke der aufgebrachten Lackschicht deckend, d.h. mindestens 8-10 µm groß war. Nach einem Ablüften bei Raumtemperatur während einer Minute wurde die Lackschicht 5 Min. bei 50°C in einem Umluft-Trockenschrank getrocknet.

Auf diesen Unterbelag wurde ein nicht pigmentiertes Gemisch (Klarlack) von

61,9 g eines fremdvernetzenden hydroxylgruppenhaltigen Polyacrylates, 60%ig in Solvesso 100 (z.B. Luprenal LR 8674 der Firma BASF AG),

36,9 g eines Melamin-Formaldehydharzes, mit Isobutanol verethert, ca. 53%ig in Isobutanol (z.B. Luwipal 015 der Firma BASF AG) und

0,1 g eines Silikonöls (Silikonöl A der Firma Bayer AG)

mit einer Trocken-Schichtstärke von ca. 35 µm mittels Druckluftpistole aufgetragen. Nach einem Ablüften von 15 Minuten bei Raumtemperatur wurde der resultierende Mehrschichtenüberzug 30 Min. lang in einem Umluft-Trockenschrank bei 130°C eingebrannt ( = vernetzt).

Der entstandene Mehrschichtenüberzug wurde nach DIN 50017 einem Schwitzwassertest unterzogen und der Glanz (gemessen mit Multigloss (Erichsen), Winkel 20°C) als Gradmesser der Veränderungen unter den Bedingungen der DIN 50017 gemessen:

0-Wert: 86 %
nach 10 d: 81 %
nach 20 d: 80 %

Beispiel 7

Getrennt wurden folgende Mischungen hergestellt:

1. 27,0 g einer handelsüblichen "non-leafing"-Metallic-Pigment-Paste auf Aluminium- oder Eisenbasis, für Wasserlacke geeignet.

0,1 g 2,4,7,9-Tetramethyl-5-decin-4,7-diol, 50 gew.%ig in Ethylenglykol und

16,0 g Butylglykol wurden sorgfältig gemischt.

2. 200,6 g der Dispersion aus Beispiel 3 wurden mit

1,8 g Ammoniak (25 gew.%ig) auf einen pH-Wert von 7,2 gestellt. Nacheinander wurden

52,9 g einer 10 gew.%igen wäßrigen Lösung von Adipinsäuredihydrazid,

1,6 g eines üblichen Fluortensids (z.B. Fluorad FC 170 C der Firma 3M), 1/1 gelöst in Isopropanol,

1,6 g eines Korrosionsinhibitors 562 (Firma Erbslöh, Düsseldorf, org. Amoniumnitrit-Lösung) und

1,6 g 2,4,7,9-Tetramethyl-5-decin-4,7-diol, 50 gew.%ig in Ethylenglykol in die Dispersion eingearbeitet (Gesamtmenge: 260,1 g).

3. Aus

146,3 g vollentsalztem Wasser

0,6 g 2,4,7,9-Tetramethyl-5-decin-4,7-diol, 50 gew.%ig in Ethylenglykol und

13,1 g des Verdickers Collacral PU 85 der Firma BASF AG, 25 gew.%ig in Wasser/Butylglykol (Polyurethanverdicker), wurde eine Verdickerlösung (Gesamtmenge 160,0 g) hergestellt.

Für die Herstellung des spritzfertigen Lackes wurde wie folgt vorgegangen:

In

43,1 g der unter 1. beschriebenen "non-leafing"-Metallic-Pigment-Paste wurden unter Rühren zunächst rasch

60,0 g der Dispersionsmischung 2, danach langsam weitere

69,6 g derselben Dispersionsmischung 2 eingerührt. Danach wurden

65,0 g der Verdickerlösung 2, weitere

129,6 g der Dispersionsmischung 2 und

95,0 g der Verdickerlösung 3 eingearbeitet. Nach Zugabe von

50,0 g vollentsalztem Wasser wurde ein spritzfertiger Lack von

512,3 g Gesamtmenge mit einem pH-Wert von 7,4 und einer Auslaufviskosität in DIN-4-Becher von ca. 16 Sekunden erhalten.

Der spritzfertige Lack wurde in bekannter Weise mit einer Druckluft-Spritzpistole auf einem Substrat so appliziert, daß die Trocken-Schichtstärke der aufgebrachten Lackschicht deckend, d.h. mindestens 8-10 μm groß war. Nach einem Ablüften bei Raumtemperatur während einer Minute wurde die Lackschicht 5 Min. bei 50°C in einem Umluft-Trockenschrank getrocknet. Auf diesen Unterbelag wurde ein nicht pigmentiertes Gemisch (Klarlack) von

61,9 g eines fremdvernetzenden hydroxylgruppenhaltigen Polyacrylates, 60 gew.%ig in Solvesso 100 (z.B. Luprenal LR 8674 der Fa. BASF AG),

36,9 g eines Melamin-Formaldehydharzes, mit Isobutanol verethert, ca. 53 gew.%ig in Isobutanol (z.B. Luwipal 015 der Fa. BASF AG) und

0,1 g eines Silikonöls (Silikonöl A der Firma Bayer AG) mit einer Trocken-Schichtstärke von ca. 35 μm mittels Druckluftpistole aufgetragen. Nach einem Ablüften von 15 Min. bei Raumtemperatur wurde der resultierende Mehrschichtenüberzug 30 Min. lang in einem Umluft-Trockenschrank bei 130°C eingebrannt (= vernetzt).

Der entstandene Mehrschichtenüberzug wurde nach DIN 50017 einem Schwitzwassertest unterzogen und der Glanz (gemessen mit "Multigloss" der Firma Erichsen, Einfallswinkel 20°) als Gradmesser der Veränderung unter den Bedingungen der DIN 50017 gemessen.

0-Wert      84 %
nach 10 d:      78 %

## Ansprüche

1. Verwendung einer wäßrigen Dispersion, enthaltend
(A) ein carbonylgruppenhaltiges Copolymerisat aus monoolefinisch ungesättigten Verbindungen, von denen mindestens 10 Gew.-% mit Hydrazidgruppen reagierende Carbonylgruppen aufweisen und
(B) Polyhydraziden,
als Unterbelag eines mehrschichtigen Überzugs auf einem Substrat.

2. Verwendung einer wäßrigen Dispersion nach Anspruch 1, enthaltend ein Copolymerisat aus (Meth)acrylsäureestern, (Meth)acrylsäure, Vinylaromaten und copolymerisierbaren Ketonen und/oder Aldehyden als Komponente (A).

3. Verwendung einer wäßrigen Dispersion nach Anspruch 1 oder 2, enthaltend Dihydrazide organischer Di- oder Oligocarbonsäuren mit 3 bis 36 C-Atomen als Komponente (B).

4. Verfahren zur Herstellung eines mehrschichtigen Überzuges auf einem Substrat, dadurch gekennzeichnet, daß man eine wäßrige Dispersion, enthaltend
(A) ein carbonylgruppenhaltiges Copolymerisat aus monoolefinisch ungesättigten Verbindungen, von denen mindestens 10 Gew.-% mit Hydrazidgruppen reagierende Carbonylgruppen aufweisen und

(B) Polyhydraziden,
als Unterbelag auf das Substrat aufbringt, das Wasser ablüftet und auf diesen Unterbelag mindestens eine weitere übliche Beschichtung als Dispersion oder Lösung aufbringt, das Lösemittel ablüftet und den resultierenden Mehrschichtenüberzug gegebenenfalls 10 bis 60 min bei 70 bis 180°C einbrennt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 016 127 (LARSSON & LE SOTA) * Ansprüche 1,8; Spalte 6, Zeilen 3-23; Beispiele 7,8 * | 1,2,4 | C 09 D 3/49 |
| Y,D | DE-A-1 495 706 (HOECHST AG) * Ansprüche 1,2; Seite 3, Zeilen 8-32 * | 1,2,4 | |
| A | * Seite 6, Zeilen 10-16 * | 3 | |

**RECHERCHIERTE SACHGEBIETE (Int. Cl.4)**

C 09 D
C 08 L
C 08 K

Der vorliegende Recherchenbericht wurde für alle Patentansprüche erstellt

| Recherchenort | Abschlußdatum der Recherche | Prüfer |
|---|---|---|
| DEN HAAG | 05-09-1988 | SCHUELER D.H.H. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
─────────────────────────────
& : Mitglied der gleichen Patentfamilie, übereinstimmendes
Dokument

EPO FORM 1503 03.82 (P0403)